# EUROPÄISCHE PATENTANMELDUNG

(11) **EP 2 390 163 A1**
(43) Veröffentlichungstag der Anmeldung: **30.11.2011**
(21) Anmeldenummer: 11004305.6
(22) Anmeldetag: 25.05.2011
(51) Int. Cl.: B62D 7/15, B62D 5/00, B62D 6/02

(54) **Verfahren und Vorrichtung zur Einstellung von Lenkwinkeln einer Allradlenkung für ein Kraftfahrzeug**

(30) Priorität: 27.05.2010 DE 102010021761
(71) Anmelder: Audi AG, 85045 Ingolstadt (DE)
(72) Erfinder: Müller, Hugo, 86701 Rohrebfels-Ballersdorf (DE); Kossira, Christoph, 85053 Ingolstadt (DE); Meitinger, Karl-Heinz, dr., 81667 München (DE); Schmid, Wolfgang, 85354 Freising (DE); Voll, Ulrich, Dr., 80636 München (DE)
(74) Vertreter: Patzelt, Heike Anna Maria

(57) **Zusammenfassung**

Die Erfindung betrifft ein Verfahren und eine Vorrichtung zur Einstellung von Lenkwinkeln (α1, α2) einer Allradlenkung für ein Kraftfahrzeug (1), wobei die Allradlenkung eine Vorderradlenkung (20), deren Lenkwinkel (α1) über ein Lenkrad (28) manuell einstellbar sind, und eine Hinterradlenkung (30) aufweist, deren Lenkwinkel (α2) in Abhängigkeit von den eingestellten Lenkwinkeln (α1) der Vorderräder (24, 26) und von der Fahrzeuggeschwindigkeit derart einstellbar sind, dass die Hinterräder (34, 36) bei geringer Fahrzeuggeschwindigkeit gegensinnig zu den Vorderrädern (24, 26) und bei hoher Fahrzeuggeschwindigkeit gleichsinnig zu den Vorderädern (24, 26) eingeschlagen sind. Erfindungsgemäß werden die Hinterräder (34, 36) bei einer erkannten kritischen Fahrsituation im Wesentlichen unabhängig von der Fahrzeuggeschwindigkeit gleichsinnig zu den Vorderädern (24, 26) eingeschlagen.

## Beschreibung

Die Erfindung betrifft ein Verfahren zur Einstellung von Lenkwinkeln einer Allradlenkung für ein Kraftfahrzeug gemäß dem Oberbegriff des Patentanspruchs 1 und eine Vorrichtung zur Einstellung von Lenkwinkeln einer Allradlenkung für ein Kraftfahrzeug nach dem Oberbegriff des Patentanspruchs 6.

In der Patentschrift DE 38 36 020 C2 wird eine Allradlenkung für Kraftfahrzeuge beschrieben. Die beschriebene Allradlenkung für Kraftfahrzeuge umfasst eine Vorderradlenkung, deren Lenkwinkel über ein Lenkrad manuell einstellbar sind, und eine Hinterradlenkung, deren Lenkwinkel in Abhängigkeit von den eingestellten Lenkwinkeln der Vorderräder und von der Fahrzeuggeschwindigkeit derart einstellbar sind, dass die Hinterräder bei geringer Fahrzeuggeschwindigkeit gegensinnig zu den Vorderrädern und bei hoher Fahrzeuggeschwindigkeit gleichsinnig zu den Vorderädern eingeschlagen sind, wobei die Hinterräder gegenüber den Vorderrädern jeweils geringere Lenkwinkel aufweisen. Hierbei sind Lenkgetriebeglieder der Vorderräder mit Lenkgetriebegliedern der Hinterräder über ein mechanisches Getriebe gekoppelt, dessen Übersetzungsverhältnis stufenlos zwischen zwei Endwerten entgegengesetzter Polarität steuerbar ist.

Der Erfindung liegt die Aufgabe zu Grunde, ein Verfahren und eine Vorrichtung zur Einstellung von Lenkwinkeln einer Allradlenkung für ein Kraftfahrzeug derart auszugestalten, dass eine Verbesserung der Fahreigenschaften im Komfort und Sicherheitsbereich möglich ist.

Erfindungsgemäß wird die Aufgabe durch Bereitstellung eines Verfahrens zur Einstellung von Lenkwinkeln einer Allradlenkung für ein Kraftfahrzeug mit den Merkmalen des Patentanspruchs 1 und einer Vorrichtung zur Einstellung von Lenkwinkeln einer Allradlenkung für ein Kraftfahrzeug mit den Merkmalen des Patentanspruchs 6 gelöst. Vorteilhafte Ausführungsformen und Weiterbildungen der Erfindung sind in den abhängigen Ansprüchen angegeben.

Um ein Verfahren und eine Vorrichtung zur Einstellung von Lenkwinkeln einer Allradlenkung für ein Kraftfahrzeug, welche eine Vorderradlenkung, deren Lenkwinkel über ein Lenkrad manuell einstellbar sind, und eine Hinterradlenkung aufweist, deren Lenkwinkel in Abhängigkeit von den eingestellten Lenkwinkeln der Vorderräder und von der Fahrzeuggeschwindigkeit derart einstellbar sind, dass die Hinterräder bei geringer Fahrzeuggeschwindigkeit gegensinnig zu den Vorderrädern und bei hoher Fahrzeuggeschwindigkeit gleichsinnig zu den Vorderädern eingeschlagen sind, derart auszugestalten, dass eine Verbesserung der Fahreigenschaften im Komfort und Sicherheitsbereich möglich ist, ist erfindungsgemäß vorgesehen, dass die Hinterräder bei einer erkannten kritischen Fahrsituation im Wesentlichen unabhängig von der Fahrzeuggeschwindigkeit gleichsinnig zu den Vorderädern eingeschlagen werden. Bei einer erfindungsgemäßen Vorrichtung stellt eine Auswerte- und Steuereinheit bei einer erkannten kritischen Fahrsituation die Lenkwinkel der Hinterräder über Steuersignale im Wesentlichen unabhängig von der Fahrzeuggeschwindigkeit so ein, dass die Hinterräder gleichsinnig zu den Vorderädern eingeschlagen sind.

Durch die Zusteuerung des Hinterradlenkwinkels zum Vorderradlenkwinkel können die Fahreigenschaften im Komfort und Sicherheitsbereich deutlich gesteigert werden. Ausführungsformen der vorliegenden Erfindung sorgen über den gesamten Geschwindigkeitsbereich des Kraftfahrzeugs für ein optimales Lenkverhalten. Durch das gegensinnige Mitlenken der Hinterräder im unteren Geschwindigkeitsbereich kann durch eine direktere Lenkübersetzung in vorteilhafter Weise der Lenkaufwand und/oder Kraftaufwand insbesondere beim Einparken bzw. Ausparken sowie bei Fahrten durch enge Gassen auf ein Minimum reduziert werden. Im mittleren Geschwindigkeitsbereich sorgt eine wesentlich direktere Auslegung der Vorderradlenkung ohne Zusteuerung der Hinterradlenkung insbesondere auf kurvenreichen Strecken für höhere Lenkpräzision und schnellere Reaktionsmöglichkeit. Bei hohen Autobahngeschwindigkeiten wird durch das gleichsinnige Mitlenken der Hinterräder eine indirektere Übersetzung eingestellt, die für einen sicheren Geradeauslauf sorgt. Insgesamt kann die Lenkübersetzung an der Vorderachse durch die mitlenkende Hinterachse um 10 bis 30% direkter eingestellt werden, als bei Fahrzeugen ohne mitlenkende Hinterachse, da der Geradeauslauf bei hohen Geschwindigkeiten durch die mitlenkende Hinterachse sichergestellt wird, während die direktere Lenkübersetzung im mittleren Geschwindigkeitsbereich ein verbessertes Handling erlaubt.

Gleichzeitig entschärfen Ausführungsformen der Erfindung in vorteilhafter Weise schwierige Fahrsituationen. So ermitteln Ausführungsformen der vorliegenden Erfindung die Lenkradwinkelgeschwindigkeit. Liegt diese über einem applizierten Schwellenwert, steuert die Hinterradlenkung gleichsinnig zum eingestellten Lenkwinkel der Vorderradlenkung zu. Diese Sicherheitsfunktion sorgt unabhängig von der Fahrzeuggeschwindigkeit, z. B. bei Ausweichmanövern, für stabile harmonische Fahrsituationen. Die überlagerte Stabilitätssteuerung entschärft schwierige Fahrsituationen und steigert die aktive Sicherheit.

Ausführungsformen der vorliegenden Erfindung schaffen je nach Fahrsituation in vorteilhafter Weise einen erlebbaren Kundennutzen. So ergibt sich im unteren Geschwindigkeitsbereich aufgrund der gegensinnig eingeschlagenen Hinterradlenkung und des erzeugten virtuell verkürzten Radstands eine verbesserte Stadtagilität. Im mittleren Geschwindigkeitsbereich ergibt sich durch die direktere Vorderradlenkung und die nichtlenkende Hinterradlenkung eine verbesserte Fahragilität. Im Hochgeschwindigkeitsbereich ergibt sich aufgrund der gleichsinnig eingeschlagenen Hinterradlenkung und des erzeugten virtuell verlängerten Radstands eine verbesserte Geradeausstabilität. Bei kritischen Fahrsituationen ergibt sich unabhängig vom Geschwindigkeitsbereich aufgrund der gleichsinnig eingeschlagenen Hinterradlenkung eine verbesserte Stabilisierung, beispielsweise bei schnellen Ausweichmanövern.

In vorteilhafter Ausgestaltung der Erfindung wird eine kritische Fahrsituation durch Auswerten einer Winkelgeschwindigkeit des Lenkrads dann erkannt, wenn die ermittelte Lenkradwinkelgeschwindigkeit einen vorgegebenen Schwellwert überschreitet. Das bedeutet, dass die Auswerte- und Steuereinheit eine kritische Fahrsituation durch Auswerten einer Winkelgeschwindigkeit des Lenkrads dann erkennt, wenn die über mindestens eine Sensoreinheit ermittelte Lenkradwinkelgeschwindigkeit einen vorgegebenen Schwellwert überschreitet. Eine kritische Fahrsituation wird somit durch erfasste extrem schnelle Lenkbewegungen am Lenkrad erkannt, welche ein Ausbrechen des Fahrzeughecks aufgrund des resultierenden Gierratenaufbaus bewirken können. Dieses Ausbrechen des Fahrzeughecks kann in vorteilhafter Weise durch das gleichsinnige Auslenken der Hinterräder zu den Vorderrädern verhindert werden.

In weiterer vorteilhafter Ausgestaltung der Erfindung werden die Hinterräder im Normalbetrieb gegensinnig zu den Vorderrädern eingeschlagen, wenn die ermittele aktuelle Fahrzeuggeschwindigkeit einen ersten Schwellwert unterschreitet. Des Weiteren werden die Hinterräder im Normalbetrieb gleichsinnig zu den Vorderrädern eingeschlagen, wenn die ermittelte aktuelle Fahrzeuggeschwindigkeit einen zweiten Schwellwert überschreitet. Zudem werden die Hinterräder im Normalbetrieb ohne Lenkwinkel in Fahrzeuglängsrichtung ausgerichtet, wenn die ermittelte aktuelle Fahrzeuggeschwindigkeit im Bereich zwischen dem ersten Schwellwert und dem zweiten Schwellwert liegt. Durch das gegensinnige Ansteuern der Hinterräder zu den Vorderrädern verringert sich der Radstand virtuell. Mit dieser Lenkkinematik kann im unteren Geschwindigkeitsbereich, vorzugsweise unter 60 km/h, die Handlichkeit des Kraftfahrzeugs wesentlich gesteigert werden. Durch den Einbau der Hinterradlenkung kann an der Vorderachse eine wesentlich direktere Lenkübersetzung, beispielsweise im Bereich von 1:10 bis 1:16, gewählt werden. Im mittleren Geschwindigkeitsbereich von z.B. 60 bis 130 km/h erfolgt kein Mitlenken der Hinterräder mit den Vorderrädern, d.h. es wird ein Lenkwinkel von 0° an den Hinterrädern eingestellt. Zur Optimierung des Lenkverhaltens in diesem Geschwindigkeitsbereich kann durch die Kombination der Hinterradlenkung und der Vorderradlenkung an der Vorderachse eine direktere Lenkübersetzung verbaut werden. Die Vorteile der direkteren Vorderradlenkung, wie präzises Lenkgefühl, agiles Fahrverhalten usw., sind in diesen Geschwindigkeitsbereich voll umsetzbar. Das Problem der Instabilität bei hohen Geschwindigkeiten mit einer direkteren Lenkung kompensieren die gesteuerten Lenkeingriffe an der Hinterachse. Bei höheren Geschwindigkeiten, beispielsweise ab ca. 130 km/h, stabilisiert die Hinterradlenkung das Kraftfahrzeug durch das gleichsinnige Zulenken der Hinterräder zu den Vorderrädern. Dadurch verlängert sich der Radstand virtuell, so dass die direkter wirkende Vorderradlenkung kompensiert werden kann.

Die Auswerte- und Steuereinheit ermittelt die aktuelle Fahrzeuggeschwindigkeit über mindestens eine weitere Sensoreinheit und stellt die Lenkwinkel der Hinterradlenkung korrespondierend mit der ermittelten aktuellen Fahrzeuggeschwindigkeit entsprecht ein.

Eine vorteilhafte Ausführungsform der Erfindung ist in der Zeichnung dargestellt und wird nachfolgend beschrieben.

Dabei zeigen:
- Fig. 1: ein schematisches Blockdiagramm eines Kraftfahrzeugs mit einem Ausführungsbeispiel einer erfindungsgemäßen Vorrichtung zur Einstellung von Lenkwinkeln einer Allradlenkung für ein Kraftfahrzeug, und
- Fig. 2 bis: 5 verschiedene schematische Kennliniendiagramme des Lenkwinkelverhältnisses zwischen Hinterradlenkung und Vorderradlenkung in Abhängigkeit von der Fahrzeuggeschwindigkeit und der Fahrsituation.

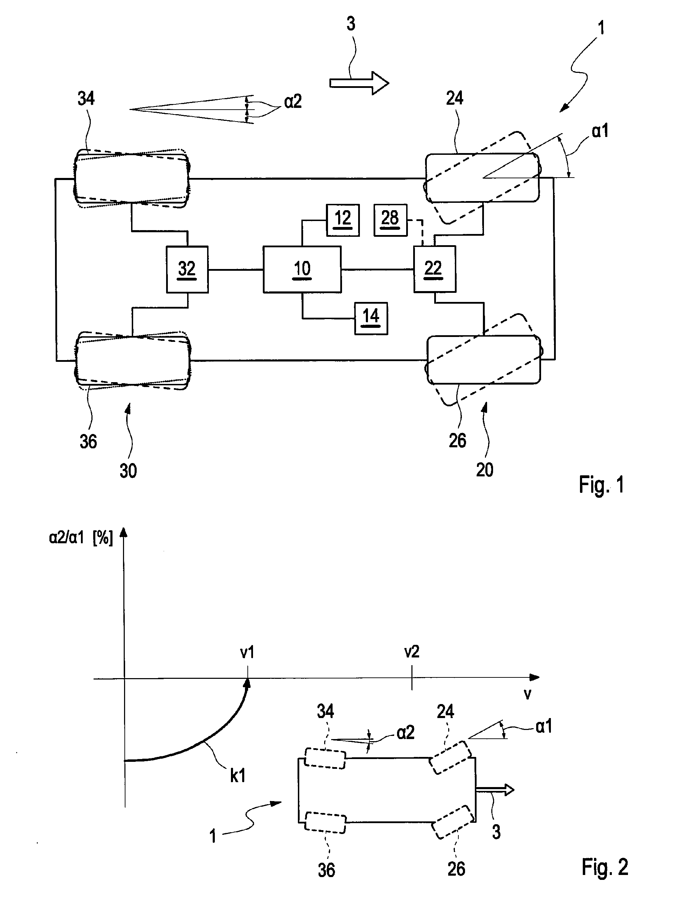

Wie auf Fig. 1 ersichtlich ist, umfasst eine Allradlenkung für ein Kraftfahrzeug 1 eine Vorderradlenkung 20, deren Lenkwinkel α1 über ein Lenkrad 28 manuell einstellbar sind, und eine Hinterradlenkung 30, deren Lenkwinkel α2 in Abhängigkeit von den eingestellten Lenkwinkeln α1 der Vorderräder 24, 26 und von der Fahrzeuggeschwindigkeit v derart einstellbar sind, dass die Hinterräder 34, 36 bei geringer Fahrzeuggeschwindigkeit v gegensinnig zu den Vorderrädern 24, 26 und bei hoher Fahrzeuggeschwindigkeit v gleichsinnig zu den Vorderädern 24, 26 eingeschlagen sind, wobei die Hinterräder 34, 36 im dargestellten Ausführungsbeispiel gegenüber den Vorderrädern 24, 26 jeweils geringere Lenkwinkelbeträge aufweisen. Im dargestellten Ausführungsbeispiel repräsentiert die durchgezogene Darstellung der Vorderräder 24, 26 und der Hinterräder 34, 36 eine Geradausfahrt des Kraftfahrzeugs 1 in die durch einen Pfeil gekennzeichnete Fahrzeuglängsrichtung 3. Die gestrichelte Darstellung der Vorderräder 24, 26 zeigt beispielhaft einen manuell über das Lenkrad 28 in Bezug auf die Fahrzeuglängsrichtung 3 eingestellten Lenkwinkel α1. Die verschiedenen Darstellungen der Hinterräder 34, 36 repräsentieren verschiedene an den Hinterrädern 34, 36 in Abhängigkeit von der Fahrzeuggeschwindigkeit v und/oder der Fahrsituation eingestellte Lenkwinkel α2 im Bezug auf die Fahrzeuglängsrichtung 3. So entspricht die durchgezogene Darstellung der Hinterräder 34, 36 einem eingestellten Lenkwinkel α2 von 0°. Die gestrichelte Darstellung der Hinterräder 34, 36 repräsentiert gegensinnig zu den Vorderrädern 24, 26 eingeschlagene Hinterräder 34, 36 und die gepunktete Darstellung der Hinterräder 34, 36 repräsentiert gleichsinnig zu den Vorderrädern 24, 26 eingeschlagene Hinterräder 34, 36.

Wie aus Fig. 1 weiter ersichtlich ist, umfasst die erfindungsgemäß Vorrichtung zur Einstellung von Lenkwinkeln α1, α2 einer Allradlenkung für ein Kraftfahrzeug 1 eine Auswerte- und Steuereinheit 10, mindestens eine Sensoreinheit 14 zur Ermittlung der Fahrzeuggeschwindigkeit v und mindestens eine Sensoreinheit 28 zur Ermittlung einer Lenkradwinkelgeschwindigkeit.

Erfindungsgemäß stellt die Auswerte- und Steuereinheit 10 bei einer erkannten kritischen Fahrsituation die Lenkwinkel α2 der Hinterräder 34, 36 über Steuersignale im Wesentlichen unabhängig von der Fahrzeuggeschwindigkeit v so ein, dass die Hinterräder 34, 36 gleichsinnig zu den Vorderädern 24, 26 eingeschlagen sind. Die Auswerte- und Steuereinheit 10 erkennt eine kritische Fahrsituation durch Auswerten der Winkelgeschwindigkeit des Lenkrads 28 beispielsweise dann, wenn die über mindestens eine Sensoreinheit 12 ermittelte Lenkradwinkelgeschwindigkeit einen vorgegebenen Schwellwert überschreitet. Im dargestellten Ausführungsbeispiel ist die Allradlenkung des Kraftfahrzeugs 1 als Stear-by-Wire-System ausgelegt, das bedeutet, dass die von der Vorderradlenkung 22 bzw. von der Hinterradlenkung 32 einzustellenden Lenkwinkel α1, α2 durch die Auswerte- und Steuereinheit 10 mittels elektrischer bzw. elektronischer Größen vorgegeben werden und über entsprechende nicht dargestellte Antriebe an den Vorderrädern 24, 26 und/oder Hinterrädern 34, 36 eingestellt werden. Alternativ können die Lenkwinkel α1 der Vorderrädern 24, 26 mechanisch direkt über das Lenkrad 28 vorgegeben werden, was durch die gestrichelte Verbindung zwischen dem Lenkrad 28 und der Vorderradlenkung 22 repräsentiert wird. Die Auswerte- und Steuereinheit 10 stellt dann das Übersetzungsverhältnis α2/α1 zwischen den eingestellten Lenkwinkeln α1 der Vorderräder 24, 26 und den Lenkwinkeln α2 der Hinterräder 34, 36 elektrisch bzw. elektronisch in Abhängigkeit von der Fahrzeuggeschwindigkeit und/oder der Fahrsituation ein.

Fig. 2 zeigt den Verlauf k1 des Übersetzungsverhältnisses α2/α1 zwischen den Lenkwinkeln α1 der Vorderräder 24, 26 und den Lenkwinkeln α2 der Hinterräder 34, 36 bei niedrigen Fahrzeuggeschwindigkeiten v. Wie aus Fig. 2 ersichtlich ist, stellt die Auswerte-und Steuereinheit 10 im Normalbetrieb die Lenkwinkel α2 der Hinterräder 34, 36 so ein, dass die Hinterräder 34, 36 gegensinnig zu den Vorderrädern 24, 26, an welchen ein Lenkwinkel α1 eingestellt ist, eingeschlagen sind, wenn die über die Sensoreinheit 14 ermittelte aktuelle Fahrzeuggeschwindigkeit v einen ersten Schwellwert v1 unterschreitet. Das bedeutet, dass bei niedrigen Fahrzeuggeschwindigkeiten v ein negatives Übersetzungsverhältnis α2/α1 eingestellt wird, dessen Betrag mit zunehmender Fahrzeuggeschwindigkeit v abnimmt. Durch das gegensinnige Ansteuern der Hinterräder 34, 36 zu den Vorderrädern 24, 26 verringert sich der Radstand virtuell. Mit dieser Lenkkinematik kann im unteren Fahrzeuggeschwindigkeitsbereich, vorzugsweise unter 60 km/h, die Handlichkeit des Kraftfahrzeugs 1 wesentlich gesteigert werden.

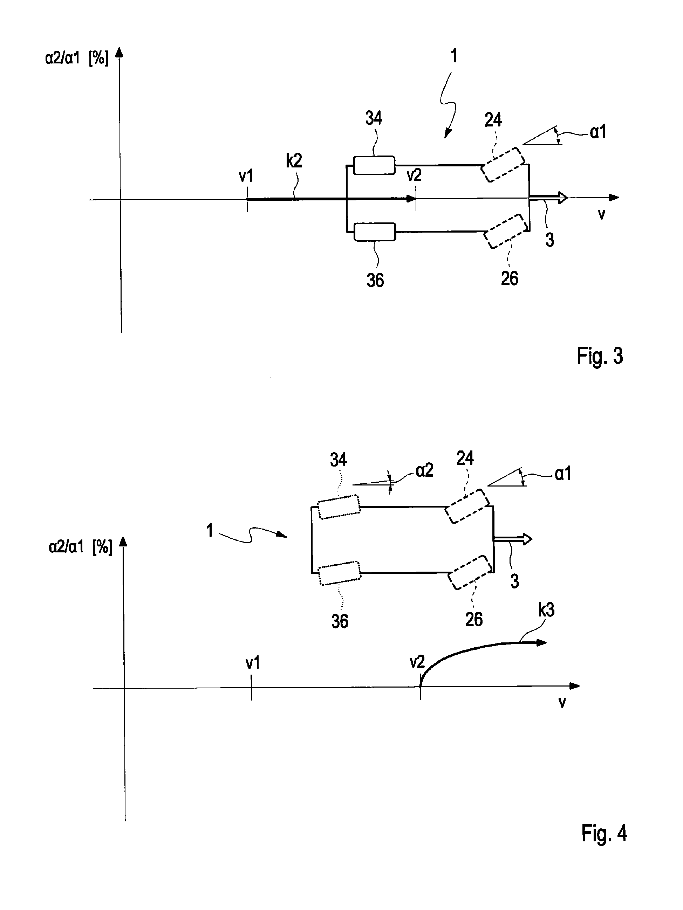

Fig. 3 zeigt den Verlauf k2 des Übersetzungsverhältnisses α2/α1 zwischen den Lenkwinkeln α1 der Vorderräder 24, 26 und den Lenkwinkeln α2 der Hinterräder 34, 36 in einem Fahrzeuggeschwindigkeitsbereich zwischen dem ersten Geschwindigkeitsschwellwert v1, von beispielsweise ungefähr 60km/h und einem zweiten Geschwindigkeitsschwellwert v2, von beispielsweise ungefähr 130km/h. Wie aus Fig. 3 ersichtlich ist, stellt die Auswerte- und Steuereinheit 10 im Normalbetrieb die Lenkwinkel α2 der Hinterräder 34, 36 mit einem Wert von 0° ein, während an den Vorderrädern 24, 26 der Lenkwinkel α1 eingestellt ist, wenn die über die Sensoreinheit 14 ermittelte aktuelle Fahrzeuggeschwindigkeit v zwischen dem ersten Schwellwert v1 und dem zweiten Schwellwert v2 liegt. Das bedeutet, dass in einem mittleren Geschwindigkeitsbereich durch den Einbau der Hinterradlenkung 32 an der Vorderradlenkung 22 eine wesentlich direktere Lenkübersetzung im Bereich von 1:10 bis 1:16 gewählt werden kann. Im mittleren Geschwindigkeitsbereich, von beispielsweise 60 bis 130km/h, wird an den Hinterrädern 34, 36 ein Lenkwinkel α2 von 0° eingestellt, so dass die Vorteile der direkteren Vorderradlenkung 22, wie präzises Lenkgefühl, agiles Fahrverhalten, in diesem Geschwindigkeitsbereich voll umsetzbar sind.

Fig. 4 zeigt den Verlauf k3 des Übersetzungsverhältnisses α2/α1 zwischen den Lenkwinkeln α1 der Vorderräder 24, 26 und den Lenkwinkeln α2 der Hinterräder 34, 36 bei hohen Fahrzeuggeschwindigkeiten v. Wie aus Fig. 4 ersichtlich ist, stellt die Auswerte- und Steuereinheit 10 im Normalbetrieb die Lenkwinkel α2 der Hinterräder 34, 36 so ein, dass die Hinterräder 34, 36 gleichsinnig zu den Vorderrädern 24, 26, an welchen ein Lenkwinkel α1 eingestellt ist, eingeschlagen sind, wenn die über die Sensoreinheit 14 ermittelte aktuelle Fahrzeuggeschwindigkeit v den zweiten Schwellwert v2 überschreitet. Das bedeutet, dass bei hohen Fahrzeuggeschwindigkeiten v ein positives Übersetzungsverhältnis α2/α1 eingestellt wird, dessen Betrag mit zunehmender Fahrzeuggeschwindigkeit v zunimmt. Durch das gleichsinnige Ansteuern der Hinterräder 34, 36 zu den Vorderrädern 24, 26 vergrößert sich der Radstand virtuell, wodurch die direktere Vorderradlenkung 22 kompensiert wird. Mit dieser Lenkkinematik kann im oberen Fahrzeuggeschwindigkeitsbereich, vorzugsweise über 130 km/h, die Stabilität und der Geradeauslauf des Kraftfahrzeugs 1 wesentlich verbessert werden.

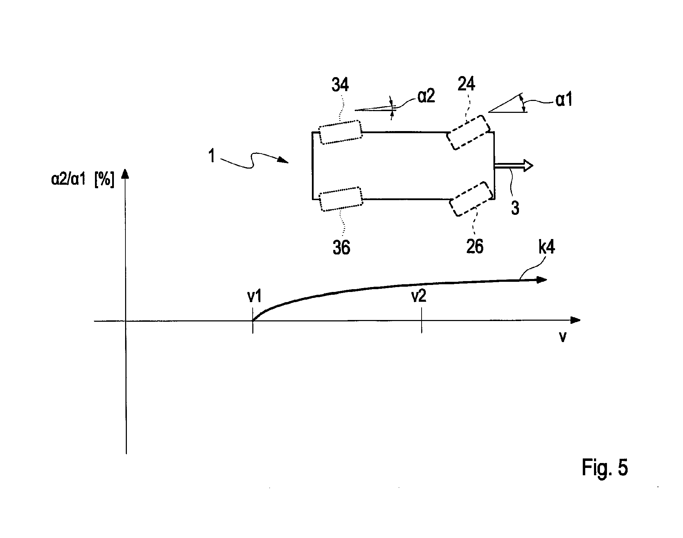

Fig. 5 zeigt den Verlauf k4 des Übersetzungsverhältnisses α2/α1 zwischen den Lenkwinkeln α1 der Vorderräder 24, 26 und den Lenkwinkeln α2 der Hinterräder 34, 36 bei erkannten kritischen Fahrsituationen. Wie aus Fig. 5 ersichtlich ist, stellt die Auswerte- und Steuereinheit 10 bei erkannten kritischen Fahrsituationen die Lenkwinkel α2 der Hinterräder 34, 36 im Wesentlichen unabhängig von der Fahrzeuggeschwindigkeit v so ein, dass die Hinterräder 34, 36 gleichsinnig zu den Vorderrädern 24, 26 eingeschlagen sind, an welchen ein Lenkwinkel α1 eingestellt ist. Das bedeutet, dass geschwindigkeitsunabhängig bei einem applizierten Schwellenwert der Lenkradwinkelgeschwindigkeit ein gleichsinniges Lenken der Hinterräder 34, 36 zu den Vorderrädern 24, 26 bewirkt wird. Die Auswerte- und Steuereinheit 10 ermittelt die Lenkradwinkelgeschwindigkeit. Liegt diese über einen applizierbaren Schwellwert werden die Hinterräder gleichsinnig zu den Vorderräder eingeschlagen und das Fahrzeug in kritischen Fahrsituationen stabilisiert. Wie aus Fig. 5 weiter ersichtlich ist, wird ein positives Übersetzungsverhältnis α2/α1 eingestellt, dessen Betrag mit zunehmender Fahrzeuggeschwindigkeit v leicht zunimmt. Durch das gleichsinnige Ansteuern der Hinterräder 34, 36 zu den Vorderrädern 24, 26 vergrößert sich der Radstand virtuell. Mit dieser Lenkkinematik kann in kritischen Fahrsituationen, beispielsweise bei Ausweichmanövern, die Stabilität des Kraftfahrzeugs 1 wesentlich verbessert werden. Im dargestellten Ausführungsbeispiel wird diese Sicherheitsfunktion vorzugsweise im mittleren und hohen Fahrzeuggeschwindigkeitsbereich eingesetzt, d.h. bei Fahrzeuggeschwindigkeiten, die über dem ersten Schwellwert v1 liegen.

Durch Ausführungsformen der vorliegenden Erfindung werden die Fahreigenschaften eines Kraftfahrzeugs mit einer Allradlenkung durch die Zusteuerung des Hinterradlenkwinkels zum Vorderradlenkwinkel im Komfort- und Sicherheitsbereich deutlich gesteigert. So sorgen Ausführungsformen der vorliegenden Erfindung über den gesamten Geschwindigkeitsbereich für ein optimales Lenkverhalten. Durch das gegensinnige Mitlenken der Hinterräder im unteren Geschwindigkeitsbereich ist durch die direktere Lenkübersetzung beim Ein- und Ausparken sowie bei Fahrten durch enge Gassen der Lenk-und Kraftaufwand auf ein Minimum reduziert. Auf kurvenreichen Strecken im mittleren Geschwindigkeitsbereich kommt die wesentlich direktere Auslegung der Vorderradlenkung voll zur Wirkung, sorgt für höhere Lenkpräzision und schnellere Reaktionsmöglichkeit. Bei hohen Autobahngeschwindigkeiten wird durch das gleichsinnige Mitlenken der Hinterräder eine indirektere Übersetzung eingestellt, die für einen sicheren Geradeauslauf sorgt. Gleichzeitig werden schwierige Fahrsituationen durch die erfindungsgemäße intelligente zu den Vorderrädern gleichsinnige Einstellung der Lenkwinkel der Hinterräder entschärft. Diese Sicherheitsfunktion sorgt unabhängig von der Fahrgeschwindigkeit, beispielsweise bei Ausweichmanövern für stabile harmonische Fahrsituationen.

### BEZUGSZEICHENLISTE

- 1: Fahrzeug
- 3: Fahrzeuglängsrichtung
- 10: Auswerte- und Steuereinheit
- 12: Lenkradwinkelsensor
- 14: Geschwindigkeitssensor
- 20: Vorderradlenkung
- 22: Einstelleinrichtung
- 24, 26: Vorderrad
- 28: Lenkrad
- 30: Hinterradlenkung
- 32: Einstelleinrichtung
- 34, 36: Hinterrad
- α1: Vorderradlenkwinkel
- α2: Hinterradlenkwinkel
- v: Geschwindigkeit
- v1: erster Geschwindigkeitsgrenzwert
- v2: zweiter Geschwindigkeitsgrenzwert
- k1, k2, k3, k4: Kennlinie

## Patentansprüche

1. Verfahren zur Einstellung von Lenkwinkeln einer Allradlenkung für ein Kraftfahrzeug, wobei die Allradlenkung eine Vorderradlenkung (20), deren Lenkwinkel (α1) über ein Lenkrad (28) manuell eingestellt werden, und eine Hinterradlenkung (30) aufweist, deren Lenkwinkel (α2) in Abhängigkeit von den eingestellten Lenkwinkeln (α1) der Vorderräder (24, 26) und von der Fahrzeuggeschwindigkeit (v) derart eingestellt werden, dass die Hinterräder (34, 36) bei geringer Fahrzeuggeschwindigkeit (v) gegensinnig zu den Vorderrädern (24, 26) und bei hoher Fahrzeuggeschwindigkeit (v) gleichsinnig zu den Vorderädern (24, 26) eingeschlagen werden, **dadurch gekennzeichnet, dass** die Hinterräder (34, 36) bei einer erkannten kritischen Fahrsituation im Wesentlichen unabhängig von der Fahrzeuggeschwindigkeit (v) gleichsinnig zu den Vorderädern (24, 26) eingeschlagen werden.

2. Verfahren nach Anspruch 1, **dadurch gekennzeichnet, dass** eine kritische Fahrsituation durch Auswerten einer Winkelgeschwindigkeit des Lenkrads (28) dann erkannt wird, wenn die ermittelte Lenkradwinkelgeschwindigkeit einen vorgegebenen Schwellwert überschreitet.

3. Verfahren nach Anspruch 1 oder 2, **dadurch gekennzeichnet, dass** die Hinterräder (34, 36) im Normalbetrieb gegensinnig zu den Vorderrädern (24, 26) eingeschlagen werden, wenn die ermittelte aktuelle Fahrzeuggeschwindigkeit (v) einen ersten Schwellwert (v1) unterschreitet.

4. Verfahren nach einem der Ansprüche 1 bis 3, **dadurch gekennzeichnet, dass** die Hinterräder (34, 36) im Normalbetrieb gleichsinnig zu den Vorderrädern (24, 26) eingeschlagen werden, wenn die ermittelte aktuelle Fahrzeuggeschwindigkeit (v) einen zweiten Schwellwert (v2) überschreitet.

5. Verfahren nach einem der Ansprüche 1 bis 4, **dadurch gekennzeichnet, dass** die Hinterräder (34, 36) im Normalbetrieb ohne Lenkwinkel (α2=0) zur Fahrzeuglängsrichtung (3) ausgerichtet werden, wenn die ermittelte aktuelle Fahrzeuggeschwindigkeit (v) im Bereich zwischen dem ersten Schwellwert (v1) und dem zweiten Schwellwert (v2) liegt.

6. Vorrichtung zur Einstellung von Lenkwinkeln einer Allradlenkung für ein Kraftfahrzeug, insbesondere zur Durchführung des Verfahrens nach einem der Ansprüche 1 bis 5, wobei die Allradlenkung eine Vorderradlenkung (20), deren Lenkwinkel (α1) über ein Lenkrad (28) manuell einstellbar sind, und eine Hinterradlenkung (30) aufweist, deren Lenkwinkel (α2) in Abhängigkeit von den eingestellten Lenkwinkeln (α1) der Vorderräder (24, 26) und von der Fahrzeuggeschwindigkeit (v) derart einstellbar sind, dass die Hinterräder (34, 36) bei geringer Fahrzeuggeschwindigkeit (v) gegensinnig zu den Vorderrädern (24, 26) und bei hoher Fahrzeuggeschwindigkeit (v) gleichsinnig zu den Vorderädern (24, 26) eingeschlagen sind, **dadurch gekennzeichnet, dass** eine Auswerte- und Steuereinheit (10) bei einer erkannten kritischen Fahrsituation die Lenkwinkel (α2) der Hinterräder (34, 36) über Steuersignale im Wesentlichen unabhängig von der Fahrzeuggeschwindigkeit (v) so einstellt, dass die Hinterräder (34, 36) gleichsinnig zu den Vorderädern (24, 26) eingeschlagen sind.

7. Vorrichtung nach Anspruch 6, **dadurch gekennzeichnet, dass** die Auswerte- und Steuereinheit (10) eine kritische Fahrsituation durch Auswerten einer Winkelgeschwindigkeit des Lenkrad (28) dann erkennt, wenn die über mindestens eine Sensoreinheit (12) ermittelte Lenkradwinkelgeschwindigkeit einen vorgegebenen Schwellwert überschreitet.

8. Vorrichtung nach Anspruch 6 oder 7, **dadurch gekennzeichnet, dass** im Normalbetrieb die Auswerte- und Steuereinheit (10) die Lenkwinkel (α2) der Hinterräder (34, 36) so einstellt, dass die Hinterräder (34, 36) gegensinnig zu den Vorderrädern (24, 26) eingeschlagen sind, wenn die über mindestens eine weitere Sensoreinheit (14) ermittelte aktuelle Fahrzeuggeschwindigkeit (v) einen ersten Schwellwert (v1) unterschreitet.

9. Vorrichtung nach einem der Ansprüche 6 bis 8, **dadurch gekennzeichnet, dass** im Normalbetrieb die Auswerte- und Steuereinheit (10) die Lenkwinkel (α2) der Hinterräder (34, 36) so einstellt, dass die Hinterräder (34, 36) gleichsinnig zu den Vorderrädern (24, 26) eingeschlagen sind, wenn die über die mindestens eine weitere Sensoreinheit (14) ermittelte aktuelle Fahrzeuggeschwindigkeit (v) einen zweiten Schwellwert (v2) überschreitet.

10. Vorrichtung nach einem der Ansprüche 6 bis 9, **dadurch gekennzeichnet, dass** im Normalbetrieb die Auswerte- und Steuereinheit (10) die Lenkwinkel (α2) der Hinterräder (34, 36) so einstellt, dass die Hinterräder (34, 36) ohne Lenkwinkel (α2=0) zur Fahrzeuglängsrichtung (3) ausgerichtet sind, wenn die über die mindestens eine weitere Sensoreinheit (14) ermittelte aktuelle Fahrzeuggeschwindigkeit (v) im Bereich zwischen dem ersten Schwellwert (v1) und dem zweiten Schwellwert (v2) liegt.

11. Vorrichtung nach einem der Ansprüche 6 bis 10, **dadurch gekennzeichnet, dass** die Vorderradlenkung (20) eine direkte Lenkübersetzung im Bereich von 1:10 bis 1:16 aufweist.
